(19)

Europäisches Patentamt
European Patent Office
Office européen des brevets

(11) **EP 1 387 461 A1**

(12) **EUROPEAN PATENT APPLICATION**

(43) Date of publication:
**04.02.2004 Bulletin 2004/06**

(51) Int Cl.$^7$: **H02J 3/18**

(21) Application number: **02425498.9**

(22) Date of filing: **31.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicants:
- **ASIRobicon S.p.A.
20126 Milano (IT)**
- **C.R.T.-Centro Ricerche Trasporti-Università deli Studi di Genova
16145 Genova (IT)**
- **S.N.C.F. Société Nationale des Chemins De Fer Français
92045 Paris La Défense Cedex (FR)**
- **R.T. Railtrack PLC
London NW1 2EE (GB)**
- **I.N.P.G. INSTITUT NATIONAL POLYTECHNIQUE DE GRENOBLE
38402 Saint Martin d'Hères (FR)**
- **INSTITUT NATIONAL DE RECHERCHE SUR LES TRANSPORTS ET LEUR SECURITE ( INRETS)
94114 Arcueil (FR)**
- **Faculté Polytechnique de Mons
7000 Mons (BE)**
- **ITALFERR - Italferr Sis. T.A.V. S.p.A.
00185 Roma (IT)**
- **NS Railinfrabeheer B.V.
3500 GA Utrecht (NL)**

(72) Inventor: **Consani, Tito
Centro San Benigno, 16149 Genova (IT)**

(74) Representative: **Falcetti, Carlo et al
Perani Mezzanotte & Partners
Piazza San Babila 5
20122 Milano (IT)**

(54) **Static VAR (reactive power) compensator for A.C. railway networks**

(57) In a static reactive power compensator (SVC) for a.c. railway network, where a thyristor controlled reactor (TCR) (5) variably compensates the excess of constant capacitive reactive power generated by the compensator, by absorbing reactive power, the current harmonics generated by the TCR are limited by an RC low pass filter (6) and further by a saturable reactor (16) series connected to the TCR and the d.c current component flowing in the TCR, as measured by a sensor, is zeroed by imposing a dissymmetry in the firing angle of the thyristors related to the measured d.c. component.

PROT. UNIT
CONTROL UNIT
FIG. 4

EP 1 387 461 A1

## Description

The present invention relates to a static VAR compensator, for rephasing A.C. railway networks.

It is know that due the nature, mostly reactive of the loads, of the electric power transmission line (catenary and rails) and of the power supplies (substation transformers) relevant voltage drops occur along the transmission line.

There is also relevant power dissipation, due to the higher current required to obtain a predetermined active power, owing to the combined effect of the phase difference between current and voltage and the voltage drop on the line, hence the lower voltage available to the load.

The voltage drops presently occurring on the catenary and in the substation equipments do no allow for an increase in the railway traffic, as it would be desirable.

A way to overcome this limitation may consist in dividing the railway network in much shorter sections, served by powering substations distributed in a more widespread way, but this solution is discouraged by the cost and by the environment safeguarding needs.

Further if the voltage drop problem is overcome, at least partly, it does not provide any advantage in terms of dissipated power.

The present invention solves this problem in effective way by using static VAR compensators distributed along the railway network, even the existing one, either at the substation output, or along the catenary itself.

Static VAR compensators, or SVC are well known and widely used in the industrial field for the compensation of disturbing loads, such as arch electric ovens, and for sustaining voltage along high voltage transmission lines.

Examples of SVC and the principle on which they are based, are provided by US4, 686, 447, and US5,434,497.

Other examples are provided by US5,907,234 and US6,107,785 which put in evidence some of the problems faced by the SVCs known in the art.

The use of SVCs for reactive power compensation in a.c. powered railways network and for voltage sustain, involves however problems which are not present in the industrial fields and requires particular arrangements, to make the SVC operation compatible with the constraints imposed by the railway signalling system and by the railway companies standards, in particular having regard to the maximum allowable overvoltages, to the amount of generated psophometric current (e.g. a weighted averaged value of the several current harmonics in the frequency range from 1600 to 2650 Hz, as defined by the CCIT standards) and to the shape factor of the catenary voltage.

To meet these requirements it has already been proposed by the applicant, as partner in a development group, a schematic model of SVC for railway networks, as described in the document: AA.VV "Using SVC for voltage regulation in railway network " High Voltage Booster European Project" $9^{th}$ European Conference on Power Electronics and Applications, 27-29 August 2001,Graz, Austria.

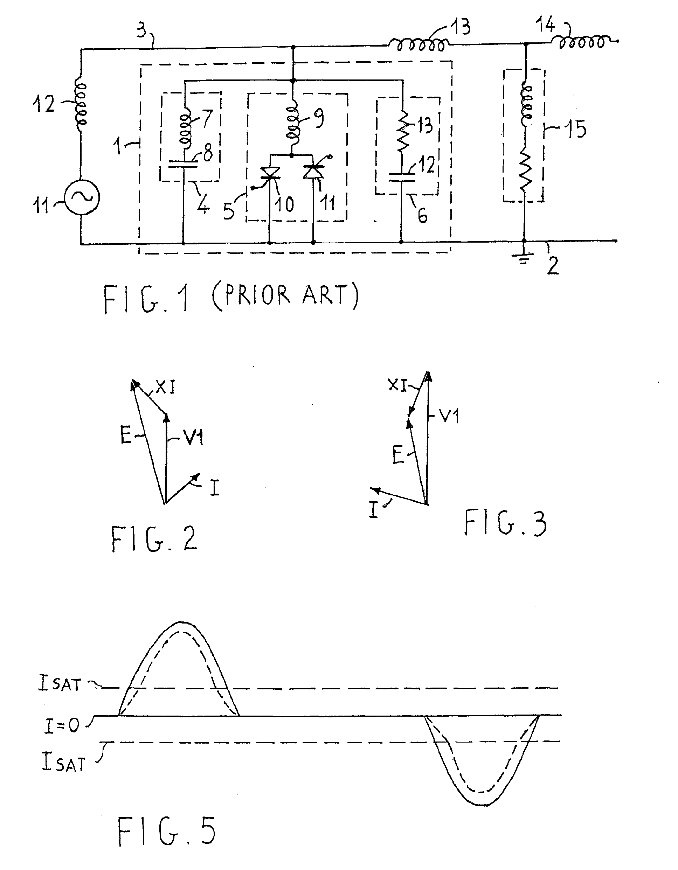

This model, later on described in summary with reference to figure 1, is considered the closest prior art at the basis of the present invention, but does not entirely meet the requirements for which it has been proposed.

In particular, it may cause the injection on the line of a d.c current component which hampers the correct performance of the railway signalling systems which use a d.c. signal for detecting the presence/ absence of trains in the section.

In addition, even if an RC filter is provided for attenuation of the harmonics having a frequency higher than 1600 Hz, the nature essentially inductive of the line may cause, in particular conditions, resonance phenomena which reduce the filter effectiveness, just in the frequency range used by the railway signalling systems for the signal transmission, causing unacceptable disturbances.

Another aspect which is not considered in the model, is that, owing to the remarkable capacitive-reactive power installed in the SVC and to the essentially inductive nature of the line, overvoltages (in the order of 80 kV for a line having a nominal value of 27,5 kV ), unacceptable for the catenary, can develop during the transient which occurs when the compensator is connected to the line.

This fact imposes the definition of suitable connection procedures.

A similar problem occurs in the case of short between catenary and rail: under these circumstances a possible non zero current in the inductive path of the compensator cannot be interrupted by disconnecting the compensator from the line.

This would result in a relevant overvoltage (even if limited at some extent by the presence of a capacitive path in parallel to the inductive one) precluding the opening of the connection/disconnection breaker.

The present invention overcomes these problems and provides a static reactive power compensator, voltage sustainer, having an inductive reactive path controlled by thyristors (TRC) in parallel to an RC low pass filter and to a capacitive path, composed of an LC filter, tuned to the third harmonic of the network frequency.

The filter provides a constant capacitive-reactive power.

In the compensator means is provided for measuring the d.c. current component which flows in the inductive path and for driving in dissymmetric way the control thyristors of the inductive path, so as to bring close to zero the continuos component, be it due to the operation of the compensator as well as to distortion or offset of the main voltage.

In addition a saturable reactor is provided, series connected to the inductive path, which rounds the current wave-form, near the zero value, thus minimising the generation of high frequency current harmonics.

These and other features, and the advantages of the invention will result more clearly from the following description of a preferred form of embodiment, the description being provided with reference to the enclosed drawings where:

- figure 1 is the diagram of a static reactive power compensator known from the prior art;
- figure 2 shows, in vector diagram, the voltage drop on a trasmission line, due to a reactive-inductive load;
- figure 3 shows, in vector diagram, the sustaining or voltage raising effect, on a trasmission line, due to a reactive-capacitive load;
- figure 4 is the electric diagram, partly block diagram, of an improved static reactive power compensator in accordance with the present invention;
- figure 5 shows, in qualitative diagram, the effect of a saturable reactor, series connected to a thyristor controlled reactor, on the current pulses flowing in the controlled reactor;
- figure 6 shows, in block diagram, an improved control unit for the static compensator of figure 4.

Referring to figure 1 an SVC 1 has been proposed for use in a railway network comprising a rail 2, a section of aerial line or catenary 3, having substantially inductive nature, shown as reactances 13,14 and powered by a generator 11 (it too having a prevailing internal reactance 12).

The compensator 1 comprises, connected between rails and catenary and in parallel with each other:

a series resonant circuit 4,
a thyristor controlled reactor (TCR) 5,
a low pass filter 6.

The alternate voltage present on the line powers one or more loads 15 (trains), variable in time (as well as in the position along the line section at which they are connected) and having a relevant reactive component.

The series resonant circuit 4 is formed by an inductor 7 and a capacitor 8, sized so that the circuit is tuned to the third harmonic of the network frequency (e.g 150 Hz for a main frequency of 50 Hz) and, at the main frequency, it generates (or absorbs, depending on the point of view) a capacitive reactive power which compensates for the inductive reactive power absorbed by the network, at least in load conditions not exceeding a nominal load.

In fact, it is known that at a frequency lower than the resonance frequency, a resonant circuit behaves substantially as a capacitive load.

The TCR consists in a inductor 9 series connected to thyristors 10,11, in parallel to each other but having opposite conductive direction.

The firing angle of the thyristors is controllable.

Inductor 9 is sized so that, at minimum firing angle of the thyristors (about 90°), the reactive power absorbed by the inductor, at the main frequency, is substantially equal to or slightly greater than the one generated by the resonant circuit 4.

It is to be noted that, at a firing angle of 90°, owing to the inductive nature of the path controlled by the thyristors, the current flowing in the path is substantially alternate, with a sinusoidal shape, delayed 90° as to the line voltage.

The low pass filter 6 comprises a capacitor 12 in series with a resistor 13.

Capacitor 10 and resistor 13 are sized so that the cut-off frequency of the filter is about 1600Hz.

The motivations which led to the adoption of this structure result clearly from the following considerations.

Missing the SVC, if E is the voltage supplied by the generator, indicatively 27,5 kV of effective value, the voltage available to the load, due to the voltage drop on the line and to the reactive nature of the load, is $V1<E$ as it results from the qualitative vector diagram of figure 2, where V1 is the voltage at the load, I the load current hence the current flowing in the transmission line, XI the voltage drop on the cumulative reactance (12,13) of the line section (or portion thereof) and the generator.

The lead of XI is obviously 90° relative to the current.

If the static voltage compensator (SVC) is present, the insertion on the line of the resonant circuit 4 only, which is sized, as already said, to compensate for the whole reactive power absorbed by the network, causes the full generator voltage E to be available to the load, less the only voltage drop due to the reactance of the line portion comprised between the SVC and the load 15.

Obviously this voltage drop may be compensated, at some extent, by increasing the installed capacity and the capacitive-reactive power output by the resonant circuit 4.

It is however clear that missing the load 15, or at load conditions lesser than the maximum foreseen, the presence of the resonant circuit 4 causes the voltage V1 on the line, at the connection point of the SVC, to be much higher than E, as it can be easily drawn from the qualitative vector diagram of figure 3.

For sake of clearness the diagram is related to the case of no load, so that V1 is also the voltage present on the whole portion of the line downstream of the SVC.

V1 is the voltage generated or better sustained by the SVC and I is the current absorbed, with 90° lead as to the voltage.

For this reason it is required to have, in parallel to the resonant circuit 4, a TCR 5 which absorbs an inductive-reactive power, variable depending on load and such as to compensate for the excess of capacitive-reactive power developed by the resonant circuit, which power is constant.

Since the control of the reactive power absorbed by the TCR 5 is obtained by changing the thyristors firing angle, the wave-form of the current flowing in the TCR is not sinusoidal and contains a relevant amount of odd harmonics, having a remarkable amplitude, even if gradually decreasing with frequency, and such as to disturb the railway signalling system.

The resonant circuit 4, tuned to the third harmonic of the main frequency and substantially consisting in an inductor and capacitor, without damping resistor, hence with a high Q-factor, efficaciously filters the third current harmonic generated by the TCR, as well as the third current harmonic possibly present on the line and generated in the powering substation or by the load (trains).

Therefore the line is "cleaned off" of any noise at the third harmonic frequency and, at some extent, limited by the filter selectivity, of the noise at frequencies close to the third harmonic.

In order to eliminate the TCR generated noise at higher frequencies and avoid interference with the signals used by the signalling systems it is therefore required to provide for a low-pass filter 6 having a cut-off frequency of about 1600 Hz.

Above such frequency the filter impedance reduces practically to the only value of resistor 13,indicatively 20 Ω and remains substantially constant.

Below such frequency the filter impedance increases with the frequency decrease owing to the capacitance 12 effect (for instance 5 μF) so that the active power dissipated at the main frequency is contained in acceptable limits and the filter 6 too contributes to the generation of capacitive-reactive power.

At frequencies between the third harmonic and the cut-off frequency (1600 Hz) the filter co-operates, in a measure inversely proportional to the frequency, with the resonant circuit 4, to achieve a good harmonics attenuation.

However it is not possible to reduce the resistance of resistor 13 beyond a certain limit and the disturbing harmonics cannot be completely suppressed by filtering, but only attenuated at some extent.

This is a limitation of the system shown in fig 1.

Another limitation consists in the fact that a perfectly symmetric driving of the thyristors firing angle cannot be achieved and the resulting dissymmetry of the positive and negative half-waves of the TCR current may cause a d.c. component which is input to the catenary and the current return rail.

This component may algebraically add to a possible d.c. current component due to distorsions or main voltage offset or also to undesired coupling with d.c. railway networks located close to the a.c. section.

Both the current harmonics and the continuos component must be limited so as not to alter in a substantive way the coded signal currents (in d.c. or at predetermined frequencies) which the railway signalling systems inject in the rail circuits.

The most severe constraints consist in the extremely low value of the d.c. component (<4A) and the a.c. component (<30 mA for f >1600 Hz ) which the SVC is allowed to inject in the line.

To comply with the first requirement it is needed, first of all, to define an adequate measurement system.

Measuring of the d.c. component is in fact particularly difficult because a very small d.c. component must be discriminated with good precision from an overlapped a.c. current in the order of several hundreds of ampere.

It is then required to define a control system capable of maintaining the measured d.c. component ideally at zero level by compensating the TCR thyristors firing angle unbalance and the possible distortion of the catenary voltage.

As far as the a.c. component at frequencies higher than 1600 Hz is concerned, it is not possible to act on the attenuation level of filter 6, which "inter alia", is affected, under particular conditions, by resonance phenomena due to the distributed inductance and capacitance of the line: it is required to act on the level of the harmonic current generated by the TCR, reducing it.

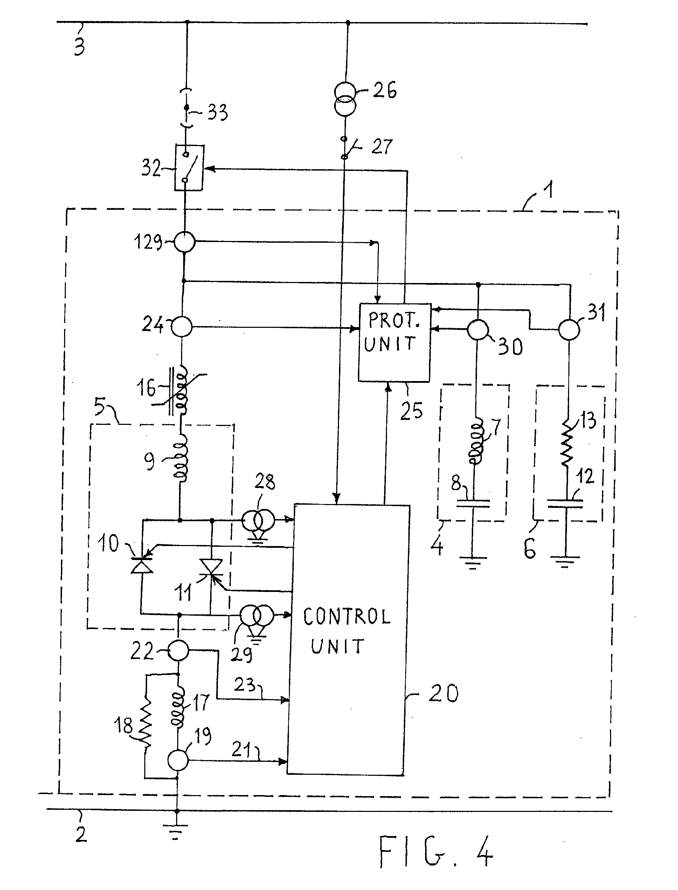

Figure 4 shows a SVC similar to the one of figure 1, but improved, in accordance with the present invention, to overcome the above mentioned drawbacks.

It must be noted that the SVC may be located immediately downstream of the powering substation, as shown in figure 1, as well as at the section end.

In figure 4 the elements functionally equivalent to those of figure 1 are identified with the same numerals.

The SVC of figure 4 comprises, as the one of Fig.1, a resonant circuit 4, tuned to the third harmonic of the main, a low pass filter 6 and a TCR 5 which differs from the one of Fig.1 because it comprises, series connected to and in addition to the inductor 9, an additional saturable reactor 16 and a measurement divider formed by an inductor 17 in parallel to a shunt resistor 18.

The reactor saturates at relatively low current values, in the order of 20 A-and has a much greater inductance than that of inductor 9.

The inductor 17 and the resistor 18 are sized with very low L and R values (indicatively 5mH with 25mΩ resistance and 2,5mΩ respectively) so that the d.c. current component flows at a substantive extent (about 10%) in the inductor, whilst the a.c component at the main frequency (and by the more the a.c components at higher frequencies) flows nearly entirely (about 99,8%) in the resistor 18.

By this arrangement a current flows in the inductive path where the d.c. component and the a.c. component have the same order of magnitude.

A current sensor 19, preferably but not necessarily of the Hall effect type, located on the inductor 17 line, can therefore provide a measurement signal of the d.c component having the required measurement precision.

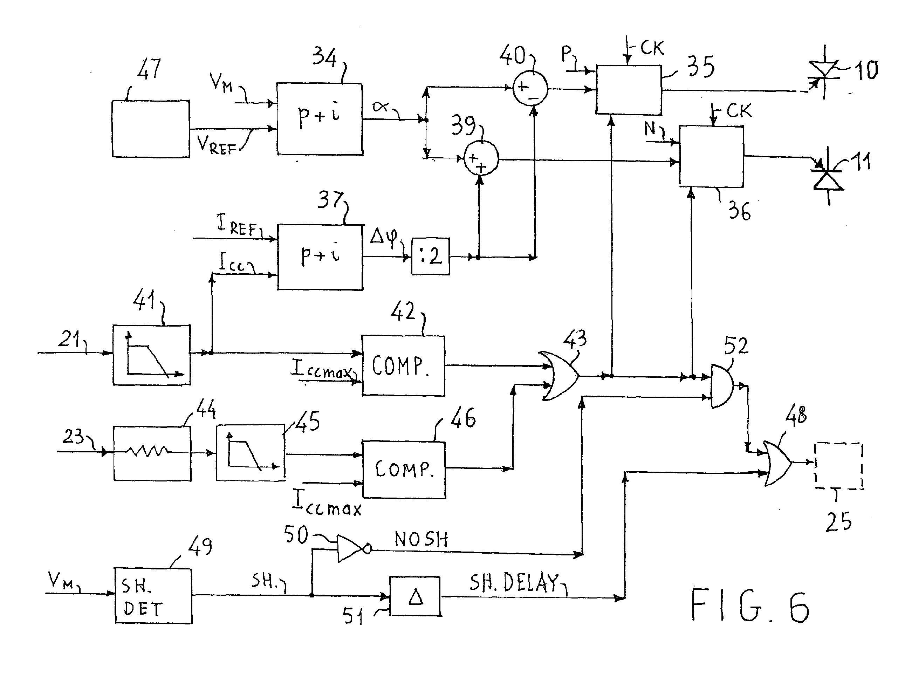

Through a line 21 the measurement signal, whose ripple has been attenuated by a conventional low-pass filter, is sent to a control unit 20, which will be considered in the following. The function of the saturable reactor 16 is explained with reference to figure 5 which shows, in solid line, the qualitative shape of the current pulses, controlled by the thyristors 10,11, which flow in the TCR, in regulation conditions and in the absence of the saturable reactor.

Basically the current pulses are spaced and distorted half waves where at the firing and the switching off there is an abrupt discontinuity in the current rate.

At the switching on, from a value dI/dt = 0 the current rate changes abruptly to a different value dI/dt 0 V(t)/L, where V(t) is the voltage between the terminals of inductor 9 and L its inductance.

The opposite discontinuity occurs when the thyristors switch off.

By contrast, if the saturable reactor 16 is present, indicating by L1 its inductance when unsaturated and by Isat the saturation current, for values of I lesser (in module) than Isat, the current changes according to the law:

$$dI/dt = V(t)/(L+L1).$$

As a consequence the edges of the current pulses are the more beveled, if not rounded, the more L1 is high, as shown with dotted line in figure 5.

A wave form results where the harmonics amplitude is substantially attenuated.

The combined action of the saturable reactor 16 and the RC filter 6 can therefore assure a noise level, input by the SVC on the line, lesser than the maximum allowable one (30 mA).

To complete the description of figure 4 it will be noted that a second current sensor is provided in the TCR path.

It too is preferably of the Hall effect type and forfards to the control unit 20, through a line 23, a total current signal (d.c plus a.c component) which is used, once the a.c component and the harmonics have been filtered, as a redundant signal, for deactivation of the whole SVC system and its disconnection from the catenary 3, if the d.c. current component exceeds a predetermined value (4 A).

In order to control the firing angle of the thyristors 10,11 a measurement transformer 26 is provided, coupled to the catenary.

The transformer 26 forwards to the control unit, through an isolation switch 27, a signal which represents the measured voltage Vm present on the catenary.

Protection devices are further provided, such as current sensors 129,30,31 (transformer type or Hall effect type), which forward to a protection unit 25, functionally equivalent to a magneto thermal protection, a signal of total current input to the SVC, of current input to the resonant circuit 4 and of current input to the filter 6 respectively.

A sensor 24 provides a current signal for the magneto thermal protection of the TCR.

The protection unit 25 acts on a breaker 32, external to the SVC, which disconnects the SVC from the line.

At least an isolation switch 33, which isolates both the breaker 32 and the SVC from the line, allows for maintenance intervention and testing of the whole equipment.

At least a voltage transformer 28, but preferably two 28,29, connected between the thyristor power electrodes and ground, forward to the control unit 20 a voltage signal which enable to check the periodical switching on and off of the thyristors, as required in the different duty conditions, and to exclude the SVC, by acting on the breaker 32, on detection of thyristors malfunctioning.

Figure 6 shows the control unit 20 in block diagram.

The control unit 20 comprises a first controller, shown as block 34, per se conventional, having proportional (p) and integral (i) control function.

Controller 34 receives as inputs signal Vm, representing the catenary voltage, as measured by transformer 26 (fig.4) and a signal $V_{REF}$ representing the desired line voltage, which may be set, as a "set point" at different values, by a programming unit 47.

By comparison of the measured voltage with the desired one, block 34 establishes the value of the firing angle

$\alpha$ which allows to obtain the desired voltage.

Even if not mandatory the controller 34 may be structured on two control loops: an outer voltage loop which, by comparing the measured voltage with the desired one, establishes the value of the TCR current which provides the desired voltage and an inner control loop which compares the effective TCR current with the required one and establishes the proper value $\alpha$ of the firing angle which produces such current.

The firing angle is clearly an electrical angle and represents the lag, ideally variable between 90° and 180°, at which a thyristor is fired, relative to the beginning of the voltage half wave during which the device may be made conductive.

In practice, for safety reasons, the control range is more limited and spans from 92°-95° to 160°.

The firing angle $\alpha$, expressed in analogic or digital form, is input to circuits 35,36, per se known, which, as a function of a clock signal CK, synchronous with the zero crossing of the main voltage, and as a function of signals P, N which identify the positive and negative half waves of the main voltage, alternatively fire the thyristors 10,11, with the required firing angle.

To these conventional features, it is added, according to one aspect of the present invention, a second controller 37, it too with p + i action.

Controller 37 receives as input, through line 21 and a low pass filter 41, a signal Icc which represents the d. c current component flowing in the TCR path and compares it with a reference signal $I_{REF}$=0 which represents a zero d.c component.

Depending on the error or difference between the two sigals, controller 37 generates a signal $\Delta\varphi$ (obviously an algebraic value) which represents the difference between the firing angle of the thyristors, which brings to zero the d.c. current component.

Signal $\Delta\varphi$, halved by a divider 38, shown for clearness purpose only, because the controller 37 may intrinsically provide the signal $\Delta\varphi/2$, is added and subtracted respectively to the firing angle $\alpha$, as determined by the first controller 35, in two circuits, respectively adder 39 and subtracting circuit 40, which feed blocks 36 and 35 respectively.

In this way the random unbalance in the thyristor firing angle, as well as the catenary voltage distorsion, which are the cause of the d.c current component, are compensated and neutralized with an opposite unbalance, intentional and controlled.

For safety reasons the control unit 20 further comprises a redundant protection system which excludes the SVC from the catenary if the d.c current component exceeds a predetermined value Iccmax.

To this purpose the sensor 19 (fig.4) feeds, through the line 21 and a low pass filter 41 (which cleans the signal from the residual ripple), a comparator 42, which receives at a second input the signal Iccmax.

If the measured d.c. current component is greater in module than Iccmax, the comparator asserts a block signal BLOCK TCR at its output.

This signal is input, through an OR gate 43, to the blocks 35,36, to inhibit the thyristors firing and is further input (through an AND gate 47 and an OR gate 48, whose function will be considered later on) to the protection unit 25, in order to disconnect the SVC from the catenary.

In addition to this main protection a further back -up protection is provided: the current sensor 22 (fig.4) provides, through line 23, a load resistor 44 and a low pass filter 45, a signal representative of the d.c current component, flowing in the TCR path, to a comparator 46, which performs the same function of comparator 42.

The output of comparator 46 is connected to an input of the OR gate 43.

Therefore the firing of the thyristors is blocked even in case onli one of the comparators 42,46 detects a d.c. value above the predetermined limit.

As a detail, it is advisable to specify that the thyristors 10,11 are in fact two batteries of thyristors, series connected, as it is required to withstand the high working voltages.

In addition they are preferably thyristors of the direct optical control type, that is driven by a laser beam having suitable power.

These devices are more reliable, allows for a more precise control of the firing angle and provide intrinsic electrical de-coupling between the firing system and the power electrodes.

It is now required to consider two other aspects of the present invention.

1. Compliance with the overvoltages admissible by the railways standards:

the relevant reactive (capacitive) power installed in the the capacitor banks (8, 12, fig.4) may cause transients at the SVC insertion on the catenary, in particular if the insertion occurs at the instant in which the main a.c. voltage has its minimum or maximum value.

In the course of such transients overvoltages may develop having a very high value, in the order of 80 kV, unacceptable to the catenary.

This difficulty is avoided by providing a particular SVC insertion procedure on the catenary.

Before insertion the programming device 47 inputs to controller 34 a reference value $V_{REF}$ lesser than the measured Vm value.

Under these conditions the controller determines that the electric firing angle must be set to a minimum, so that the TCR absorbs the maximum possible reactive power.

Then it controls, even if the TCR operates in absence of applied voltage, the firing of the thyristors.

Clearly the thyristors switching on effectively occurs only when the breaker 32 is closed.

As an alternative the minimum firing angle may be forced by temporary excluding the controller 34.

Under these conditions, as already indicated, the TCR absorbs in practice the same reactive power which is cumulatively generated (in the sense that it is capacitive-reactive power) by the third harmonic resonant circuit 4 and by the low pass filter 6.

In other words the set of the TCR, of circuit 4 and filter 6, in parallel to each other, behaves as an anti-resonant or parallel resonant circuit, tuned to the main frequency.

It is well known that an anti-resonant circuit, at the resonance frequency, has a very high input impedance, theoretically infinite in the absence of resistive losses and in any case purely resistive.

Therefore in these conditions the SVC insertion on the line causes in practice a transient current flow, required to provide the SVC with the initial circuit charging energy, with a consequent voltage transient, having a duration of few cycles, during which the voltage level of the catenary, irrespective of the instant at which the insertion occurs, may assume peak values limited and acceptable.

Once the insertion is performed, which insertion, except for the initial transient, does not alter the level of the catenary voltage, the signal $V_{REF}$ may be changed and set to obtain the desired regulation, such as for example the exclusion of the TCR in order to obtain the maximum catenary voltage, or the TCR activation with a variable firing angle of the thyristors to maintain the catenary voltage at a predetermined level, irrespective of the load changes.

Advantageously the same procedure may be followed, even if not mandatory, to perform the SVC disconnection from the catenary, in case off-duty is required for maintenance and testing of the equipment: the reference value $V_{REF}$ may be set to cause the full activation of the TCR or, in case, an operation with very low firing angle.

Under these conditions the current transferred between the catenary and the SVC is very low, because the SVC behaves as a load having high impedance, purely resistive or with minimum capacitive component.

Switching off of the breaker occurs in condition of minimum current, in practice without arching.

The energy stored in the SVC is then gradually wasted, with damped oscillations of the anti-resonant system, by the resistor 13 of the low pass filter and by the intrinsic resistance of the several components.

2. Management of the short between catenary and rail:

quite different is the situation which occurs in case of short between catenary and rail.

In this case, if the TCR is active, at the random instant in which the short occurs, the possible current flowing at that instant in the TCR cannot be abruptly interrupted (nor it can be switched on the parallel paths with the risk to develop very high overvoltages).

Only when this current is sufficiently reduced it is possible to disconnect the SVC from the power line.

This is not enough: in fact it is also required to prevent the intervention of the d.c. protection circuits already seen.

To this purpose, considering again figure 6, a device 49 (SH. DET) is provided in the control unit, which detects the occurrence of a short.

At the output of the device a signal SH (for "short") is asserted in case of short.

Device 49 may consist in a simple rectifying bridge, fed by signal Vm, representative of the catenary voltage, in a low pass filter downstream the bridge and in an inverting stage downstream of the filter.

Signal SH, inverted by NOT 50 is input to an input of an AND gate 52 which subjects the immediate intervention of the protection unit 25, driven by the d.c. current protection circuits, to the absence of short and to the presence of the main voltage.

Eventually the short signal SH, suitably delayed by a delay element 51, activates the protection unit 25 through the OR gate 48.

It is clear that the implementation of the several devices and their interconnection may lead to several changes and the description which has been provided is merely summary for reason of clearness and simplicity.

For indication purpose the preferred electrical values of the main components of the SVC, as the described one, intended for operation at the main frequency of 50 Hz, are provided in the following:

| | |
|---|---|
| Inductor 7 | L = 27,5 mH |
| Capacitor 8 | C = 41 μF |

(continued)

| | |
|---|---|
| Inductor 9 | L = 170 mH |
| Capacitor 12 | C = 5 μF |
| Resistor 13 | R = 20 Ω |
| Saturable reactor 16 | $L_{MAX}$ = 340 mH; $L_{min}$ = 7 mH |
| Measuring inductor 17 | L = 5 mH (R = 25 mΩ) |
| Measuring resistor 18 | R = 2,5 mΩ |

**Claims**

**1.** Static VAR (reactive power) compensator for a.c. powered railway network comprising, in parallel to each other:

- a resonant crcuit (4), tuned to a frequency higher than the main frequency, to generate a constant capacitive reactive power,
- a thyristor (10,11) controlled reactor (9) to absorb a variable reactive power,
- an RC filter (6) to attenuate the current harmonics at high frequency generated by said controlled reactor (9), and
- a control unit (34) for controlling the firing angle of said thyristors, as a function of a desired line voltage,

**characterised by** that it further comprises:

- means (17,18,19,41) for detecting the d.c component of the current flowing in said controlled reactor (9) and providing a corresponding d.c signal, and
- control means (37,39,40) responsive to said d.c. signal for causing a dissymmetry in the firing angle of said thyristors which compensates and zeroes said d.c. component.

**2.** Static compensator as in Claim 1, where said detecting means (17,18,19,41) for detecting the d.c. current component flowing in said controlled reactor comprises:

- a measuring inductor (17) series connected to said controlled reactor (9),
- a shunt resistor (18) in parallel to said measuring inductor (17), and
- a current sensor for detecting the current flowing in said measurement inductor (17).

**3.** Static compensator as in Claim 1 or 2 where said resonant circuit (4) is tuned to the third harmonic of the main voltage.

**4.** Static compensator as in Claim 1,2 or 3 comprising a saturable reactor (16) in series with said controlled reactor (9).

**5.** Static compensator as in any one of the preceding Claims, comprising a protection circuit (42,43) inhibiting the firing of said thyristors and disconnecting said compensator from the line, upon detection of a d.c. current component exceeding a predetermined value.

**6.** Static compensator as in Claim 5 comprising a redundant sensor (22) of the current flowing in said controlled reactor (9) and a redundant protection circuit (44,45,46) for inhibiting the firing of said thyristors and disconnecting said compensator from the line, upon detection, by said redundant current sensor (22) of a d.c. current component, flowing in said controlled reactor, exceeding a predetermined value.

**7.** Static compensator as in any one of the preceding Claims, where said resonant circuit (4), said RC filter (6) and said controlled reactor (9), when controlled with a minimum thyristors firing angle, form an anti resonant circuit substantially tuned to the main line frequency, said compensator comprising means (47) for imposing to said compensator, before its connection to the line by closure of a breaker (32) a working state in which said thyristors are fired with said minimum firing angle.

**8.** Static compensator as in any of the preceding claims, comprising a detecting device (49) detecting line shorts, and delay means (51,47,48) enabling the disconnection of said compensator from the line with a predetermined delay as to the detection of a line short.

**9.** Static compensator as in any one of the preceding claims, where said thyristors are optically controlled thyristors.

**10.** Static compensator as in any one of the preceding claims, where said current sensor (19) and said redundant sensor (22) are Hall effect sensors.

**11.** Static compensator as in any one of the preceding claims connected, through a breaker (32) to the end of an A. C railway segment opposite to the segment end powered by a powering substation (11,12).

3
13
14
12
7
9
13
1
8
12
15
11
4
5
10
11
6
2

FIG. 1 (PRIOR ART)

XI
E
V1
I
XI
V1
E
I

FIG. 2

FIG. 3

ISAT
I=0
ISAT

FIG. 5

3
26
33
27
32
1
129
PROT.
UNIT
24
31
30
16
25
5
13
7
9
28
8
12
10
4
6
11
CONTROL
UNIT
29
22
23
20
17
18
19
21
2
FIG. 4

10
11
25
48
52
36
35
CK
CK
N
P
40
39
43
:2
Δφ
α
34
p+i
37
p+i
42
COMP.
46
COMP.
45
44
41
47
$V_M$
$V_{REF}$
$I_{REF}$
$I_{cc}$
$I_{ccmax}$
$I_{ccmax}$
21
23
NOSH
50
SH. DELAY
Δ
51
SH.
49
SH. DET
$V_M$

FIG. 6

European Patent Office

# EUROPEAN SEARCH REPORT

Application Number
EP 02 42 5498

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 4 001 671 A (BRENNEN MICHAEL B ET AL) 4 January 1977 (1977-01-04)<br>* abstract *<br>* column 1, line 21 - line 34 *<br>* paragraph 'SUMMARYOFTHEINVENTION! *<br>* column 18, line 35 *<br>* from column 18, line 35 up to column 19, ine 30*<br>* claim 4 lines 38-41,51-56*<br>* figures 3A-3E,8 * | 1,3,4,9, 11 | H02J3/18 |
| Y,D | SEDDIK BACHA ET ALIAS: "Using SVC for voltage regulation in railways network high voltage booster european project" EPE 2001, GRAZ, 27 - 29 August 2001, pages 11-20, XP001149905<br>* figure 3A * | 1,3,4,9, 11 | |
| Y | US 4 398 141 A (BRENNEN MICHAEL B ET ALANN) 9 August 1983 (1983-08-09)<br>* column 3, line 3 - line 10 *<br>* figure 1 * | 9,11 | TECHNICAL FIELDS SEARCHED (Int.Cl.7)<br>H02J |
| Y | PATENT ABSTRACTS OF JAPAN vol. 017, no. 204 (P-1524), 21 April 1993 (1993-04-21) & JP 04 344909 A (TOSHIBA CORP), 1 December 1992 (1992-12-01)<br>* abstract * | 4 | |

The present search report has been drawn up for all claims

| Place of search | Date of completion of the search | Examiner |
|---|---|---|
| THE HAGUE | 26 March 2003 | Marannino, E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 42 5498

This annex lists the patent family members relating to the patent documents cited in the above-mentioned European search report. The members are as contained in the European Patent Office EDP file on
The European Patent Office is in no way liable for these particulars which are merely given for the purpose of information.

26-03-2003

| Patent document cited in search report | Publication date | Patent family member(s) | Publication date |
|---|---|---|---|
| US 4001671 A | 04-01-1977 | CA 1033010 A1 | 13-06-1978 |
| | | JP 1067401 C | 23-10-1981 |
| | | JP 51089146 A | 04-08-1976 |
| | | JP 56011170 B | 12-03-1981 |
| US 4398141 A | 09-08-1983 | AU 561812 B2 | 21-05-1987 |
| | | AU 8695382 A | 24-03-1983 |
| | | CA 1167921 A1 | 22-05-1984 |
| | | IN 155996 A1 | 20-04-1985 |
| | | JP 58058834 A | 07-04-1983 |
| JP 04344909 A | 01-12-1992 | NONE | |

EPO FORM P0459

For more details about this annex : see Official Journal of the European Patent Office, No. 12/82